# EUROPÄISCHE PATENTANMELDUNG

(11) **EP 0 769 474 A2**
(43) Veröffentlichungstag der Anmeldung: **23.04.1997**
(21) Anmeldenummer: 96111489.9
(22) Anmeldetag: 17.07.1996
(51) Int. Cl.: C02F 1/42

(54) **Doppelinjektor**

(30) Priorität: 17.10.1995 DE 19538617
(71) Anmelder: Judo Wasseraufbereitung GmbH, D-71364 Winnenden (DE)
(72) Erfinder: Schuler, Torsten, 71573 Allmersbach (DE)
(74) Vertreter: KOHLER SCHMID + PARTNER

(57) **Zusammenfassung**

Ein Injektor für den Transport und die Verdünnung einer konzentrierten Regeneriermittellösung zur Regeneration einer Wasserbehandlungsanlage, die Mittel zur Aufbereitung von Wasser aufweist, mit einer Treibwasserdüse, durch die Treibwasser in eine mit der Regeneriermittellösung über einen Sauganschluß in Verbindung stehende Unterdruckkammer derart eingeleitet werden kann, daß Regeneriermittellösung angesaugt und mit dem Treibwasser zu Mischwasser vereinigt wird, sowie mit einer Fangdüse, durch die das Mischwasser den Mitteln zur Wasseraufbereitung zugeführt wird, ist dadurch gekennzeichnet, daß zwei Injektoren (I, II) an dieselbe Treibwasserleitung (2) angeschlossen sind, wobei der Mischwasserausgang (6, 7) des ersten Injektors (I), der die Regeneriermittellösung ansaugt, an den Sauganschluß des zweiten Injektors (II) angeschlossen ist, so daß erst das Mischwasser, das der zweite Injektor (II) produziert, das eigentliche für die Regenerierung eingesetzte Mischwasser darstellt. Ein derartiger Injektor zeigt optimales Transport- und Saugverhalten und ist zudem unempfindlich gegenüber unterschiedlichen Drücken auf seiner Ausgangsseite.

## Beschreibung

Die Erfindung betrifft einen Injektor für den Transport und die Verdünnung einer konzentrierten Regeneriermittellösung, insbesondere mit definierter Konzentration, zur Regeneration einer Wasserbehandlungsanlage die Mittel zur Wasseraufbereitung aufweist, mit einer Treibwasserdüse, durch die Treibwasser in eine mit der Regeneriermittellösung über einen Sauganschluß in Verbindung stehende Unterdruckkammer derart eingeleitet werden kann, daß Regeneriermittellösung angesaugt und mit dem Treibwasser zu Mischwasser vereinigt wird, sowie mit einer Fangdüse, durch die das Mischwasser den Mitteln zur Wasseraufbereitung zugeführt werden kann.

Ein solcher Injektor ist beispielsweise aus der DE 19 49 640 C3 bekannt.

Ionenaustauscheranlagen, wie z. B. Enthärtungsanlagen oder Anlagen zur Nitratverminderung, werden üblicherweise mit einer wäßrigen NaCl-Lösung regeneriert. Normalerweise wird in einem separaten Behälter, der mit festem Kochsalz in der Form von z. B. Salztabletten oder Salzblöcken gefüllt ist, als Regeneriermittellösung eine gesättigte Salzsole erzeugt, denn Frischwasser (häufig auch als Nachspeisewasser bezeichnet), das in diesen Behälter gegeben wird, löst solange Kochsalz, bis die Sättigungskonzentration erreicht ist. Es besteht jedoch auch die Möglichkeit, fertige Salzsole aus einem Vorratstank als Regeneriermittellösung einzusetzen.

Dieses konzentrierte Regeneriermittel kann jedoch in der vorliegenden Form noch nicht zur Regeneration benutzt werden. Es muß zum einen auf eine optimale Konzentration mit Wasser verdünnt und zum anderen zu dem zu regenerierenden Harz der Ionenaustauscherstufe hintransportiert werden. Diese beiden Funktionen, also die Verdünnung und der Transport, werden bei der bekannten Vorrichtung mit dem Injektor realisiert.

Die in der DE 19 49 640 C3 oder beispielsweise auch in der EP 0 207 208 A1 beschriebenen Injektoren haben eine Treibwasserzuführung, einen Mischwasserauslaß und einen Sauganschluß.

Ähnlich wie bei einer Wasserstrahlpumpe wird das Treibwasser in einer Düse beschleunigt. Hierdurch wird ein Unterdruck im Injektor erzeugt, der über den Sauganschluß die konzentrierte Regeneriermittellösung ansaugt. Diese mischt sich mit dem Treibwasser und wird mit diesem zusammen von einer Fangdüse aufgenommen und als Mischwasser über den Mischwasserauslaß dem zu regenerierenden Harz zugeführt.

Für die Regenerierung wichtig ist zum einen, daß der oben beschriebene Injektor zuverlässig saugt, das heißt also die konzentrierte Regeneriermittellösung fördert. Zum anderen läßt sich über das Mischungsverhältnis von Treibwasser- und Regeneriermittellösungsvolumenstrom die Mischwasserkonzentration und bei einer bestimmten Menge an konzentrierter Regeneriermittellösung somit auch das Mischwasservolumen einstellen.

Die erste zu erfüllende Voraussetzung ist ein zuverlässiges Saugverhalten des Injektors. Bei einem Mischwasservolumenstrom von ca. 10 l/h läßt sich dies mit Düsendurchmessern von 0,3 - 0,5 mm und einem Mischungsverhältnis von Treibwasser zu Regeneriermittellösung von 2 : 1 bis 3 : 1 realisieren. Dies ist jedoch nicht immer die günstigste Mischwasserkonzentration für eine optimale Salzausnutzung. Je nach dem verwendeten Harztyp werden Mischungsverhältnisse von 2 : 1 bis 15 : 1 benötigt, um eine optimale Salzkonzentration im Mischwasser einzustellen und/oder ein entsprechend großes Mischwasservolumen zu erzeugen. Da bei spritztechnisch hergestellten Injektoren schon kleine Toleranzen aufgrund der oben genannten Düsendurchmesser zu einer erheblichen Streuung des Mischungsverhältnisses und des Mischwasservolumenstromes führen, werden hier entweder recht aufwendige Konstruktionen, wie in DE 26 30 164 A1 und DE 31 21 336 A1 vorgeschlagen, erforderlich, um das gewünschte Mischungsverhältnis hinreichend genau einzustellen, oder aber die Salzausnutzung ist nicht optimal.

Eine deutliche Reduzierung dieser Problematik wird durch den in DE 42 21 013 C1 beschriebenen Bypass-Injektor erreicht, der parallel zum eigentlichen Injektor eine Bypass-Düse aufweist, mit deren Hilfe die Regeneriermittelverdünnung vom Regeneriermitteltransport entkoppelt wird. Nachteilig bei dieser Erfindung, die erstmalig eine starke, definierte Verdünnung der Regeneriermittellösung auch bei kleinen Mischwasservolumenströmen ermöglicht, ist die Absenkung des Differenzdruckes am Injektor durch den Wasservolumenstrom, der durch die Bypass-Düse geht. Dies führt dazu, daß der Bypass-Injektor in seiner Funktion nicht ganz unabhängig ist vom Druckverlust der ihm nachgeschalteten Komponenten, wie z. B. dem zu regenerierenden Harzbett.

Aufgabe der vorliegenden Erfindung ist es daher, einen Injektor der eingangs genannten Art mit optimalem Transport- und Saugverhalten für den Transport und die Verdünnung von Regeneriermittellösung vorzustellen, der darüber hinaus unempfindlich ist gegenüber unterschiedlichen Drücken auf der Ausgangsseite des Injektors.

Diese Aufgabe wird erfindungsgemäß auf ebenso überraschend einfache wie zuverlässig wirkende Weise dadurch gelöst, daß zwei Injektoren an dieselbe Treibwasserleitung angeschlossen sind, wobei der Mischwasserausgang des ersten Injektors, der die Regeneriermittellösung ansaugt, an den Sauganschluß des zweiten Injektors angeschlossen ist, so daß erst das Mischwasser, das der zweite Injektor produziert, das eigentliche für die Regeneration eingesetzte Mischwasser darstellt.

Das erreichbare Mischungsverhältnis von Regeneriermittellösung zum Verdünnungswasser als Summe der beiden Treibwasservolumenströme wird durch die Verhältnisse der Düsendurchmesser der Injektoren bestimmt. Der Mischwasservolumenstrom, der den zweiten Injektor verläßt, ist proportional zur freien Querschnittsfläche der Düsen.

Diese einfache Anordnung kann für einen bestimmten Anwendungsfall (gewünschte Mischwasserkonzentration sowie Mischwasservolumenstrom nach dem zweiten Injektor) optimiert und in der Serienproduktion gefertigt werden. Für jeden Anwendungsfall, also z. B. in Abhängigkeit vom verwendeten Harztyp oder der Anlagengröße, gibt es daher eine optimierte Anordnung. Um nicht für jede derartig optimierte Anordnung ein eigenes, teures Spritzwerkzeug herstellen zu müssen, sind bei einer bevorzugten Ausführungsform der Erfindung die Treibwasserdüsen und die Fangdüsen als Einsätze ausgeführt, die dann mit den jeweils optimalen Düsendurchmessern in die Injektorgehäuse hineingesteckt oder geschraubt werden.

Bei Weiterbildungen dieser Ausführungsform kann auch ein ganzes Set von Düseneinsätzen mit unterschiedlichen, insbesondere genormt abgestuften Düsendurchmessern bereitgehalten werden, um den Injektor auf die jeweils gewünschten Betriebsbedingungen umzustellen.

Besonders vorteilhaft sind Ausführungsformen der Erfindung, bei denen das Verhältnis der Querschnittsflächen der Fangdüsen zu der Querschnittsfläche der jeweils zugehörigen Treibwasserdüse etwa 2 : 1 ist, und bei denen die Treibwasserdüse des zweiten Injektors etwa die gleiche Querschnittsfläche hat wie die Fangdüse des ersten Injektors. Damit lassen sich besonders gute Ergebnisse erzielen.

Bei weiteren vorteilhaften Ausführungsformen der Erfindung können auch drei oder mehr Injektoren auf die oben beschriebene Art hintereinandergeschaltet werden. Damit läßt sich die Regeniermittellösung besonders feinfühlig einstellen.

Bei Ausführungsformen der Erfindung ist die Regeneriermittellösung eine gesättigte oder verdünnte Salzsole, insbesondere eine wäßrige NaCl-Lösung. Bei anderen Ausführungsformen kann die Regeneriermittellösung jedoch auch aus gesättigter oder verdünnter Säure oder Lauge bestehen.

Besonders bevorzugt ist die Verwendung des oben beschriebenen erfindungsgemäßen Injektors in einer Wasserbehandlungsanlage, insbesondere einer Ionenaustauscheranlage für die Hauswasser- oder Industriewasserbehandlung, mit Mitteln zur Aufbereitung von Wasser, insbesondere einer ein Harzbett enthaltenden Ionenaustauscherstufe, mit einem Vorratsgefäß für die Bereitstellung einer Regeneriermittellösung zum Regenerieren der Mittel zur Wasseraufbereitung, insbesondere einem Salzsolebehälter. Damit wird erreicht, daß sowohl das Mischungsverhältnis zwischen Regeneriermittellösung und Treibwasser als auch der Volumenstrom des zu erzeugenden Mischwassers trotz fertigungsbedingter Toleranzen der Düsendurchmesser und unabhängig vom sich einstellenden Druckverlust in den nachfolgend von fertig verdünntem Regeneriermittel (Mischwasser aus dem zweiten Injektor) durchströmten Komponenten (z. B. Harzbett) im Injektor mit hoher Genauigkeit eingestellt werden kann.

Die Erfindung wird im folgenden anhand des in der Zeichnung dargestellten Ausführungsbeispiels näher beschrieben und erläutert. Die der Beschreibung und der Zeichnung zu entnehmenden Merkmale können bei anderen Ausführungsformen der Erfindung einzeln, für sich oder zu mehreren in beliebiger Kombination Anwendung finden. Insbesondere können auch drei oder mehr Injektoren auf die beschriebene Art hintereinander geschaltet werden.

Die Figur zeigt einen schematischen Schnitt durch eine Ausführungsform des erfindungsgemäßen Doppelinjektors.

### Beispiel 1:

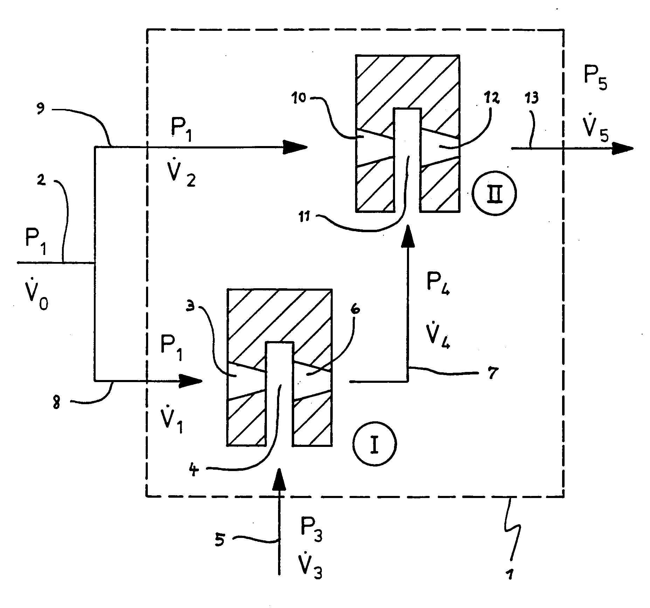

In der Figur 1 ist ein erfindungsgemäßer Doppelinjektor 1 dargestellt. Er besteht aus einer ersten Injektoreinheit I und aus einer zweiten Injektoreinheit II. Das Treibwasser aus einer Treibwasserleitung 2 steht unter einem Druck P₁ und teilt sich in zwei Volumenströme V̇₁ und V̇₂ auf. V̇₁ dient dem ersten Injektor I als Treibwasser. Dieses gelangt über eine Leitung 8 und eine Treibwasserdüse 3 in die Unterdruck- bzw. Mischkammer 4 des ersten Injektors I. Hierdurch wird in der Mischkammer 4 ein Unterdruck erzeugt und über eine Solesaugleitung 5 konzentrierte Regeneriermittellösung mit einem Volumenstrom V̇₃ und unter einem Druck P₃ angesaugt. Das Mischwasser verläßt den ersten Injektor I über eine Fangdüse 6 und gelangt in eine Leitung 7 unter einem Druck P₄ und mit einem Volumenstrom V̇₄.

V̇₂ dient dem zweiten Injektor II als Treibwasser. Dieses gelangt über eine Leitung 9 und eine Treibwasserdüse 10 in die Unterdruck- bzw. Mischkammer 11 des zweiten Injektors II. Hierdurch wird in der Mischkammer 11 ein Unterdruck erzeugt und über die Saugleitung 7 das Mischwasser des ersten Injektors I angesaugt. Das Mischwasser des zweiten Injektors II verläßt diesen über eine Fangdüse 12 und gelangt als fertig verdünntes Regeneriermittel in eine Leitung 13 mit einem Volumenstrom V̇₅ und unter einem Druck P₅.

### Beispiel 2:

Bei einer besonders bevorzugten Ausführungsform ist das Düsenquerschnittsverhältnis der Fangdüsen 6 bzw. 12 zu den Treibwasserdüsen 3 bzw. 10 jeweils ca. 2 zu 1 und das Fangdüsenquerschnittsverhältnis des zweiten Injektors II zum ersten Injektor I ist ebenfalls ca. 2 zu 1. Bei einem Durchmesser der Treibwasserdüse 3 beim ersten Injektor I von ca. 0,4 mm ergibt sich dann ein Regeneriermittelvolumenstrom V̇₅ von etwa 50 l/h und ein Mischungsverhältnis der konzentrierten Regeneriermittellösung zum Verdünnungswasser von ca. 1 : 10.

Es ist leicht nachvollziehbar, daß eine Vergrößerung der Düsendurchmesser zu einer Vergrößerung von V̇₅ führt und eine Verkleinerung der Düsendurchmesser zu einer Verkleinerung von V̇₅ im entsprechenden Verhältnis.

Das Mischungsverhältnis des über die Leitung 13 den Doppelinjektor mit Volumenstrom V̇₅ verlassenden Mischwassers ist durch eine Variation der verschiedenen Düsendurchmesser der Düsen 3, 6, 10, 12 etwa im Bereich von 1 : 2 bis 1 : 20 (Verhältnis: konzentrierte Regeneriermittellösung zu Verdünnungswasser mit V̇₀) möglich.

### Beispiel 3:

In einer ganz besonders vorteilhaften Ausführungsform sind daher eine oder mehrere der Düsen 3, 6, 10, 12 als in die Injektoren I, II einsetzbare oder einschraubbare Düseneinsätze ausgeführt. Hiermit ist es möglich, mit einem Doppelinjektorgehäuse mehrere verschiedene Doppelinjektoren herzustellen, die ein unterschiedliches Mischungsverhältnis und/oder unterschiedliche Volumenströme V̇₅ bzw. V̇₃ ermöglichen.

## Patentansprüche

1. Injektor für den Transport und die Verdünnung einer konzentrierten Regeneriermittellösung, insbesondere mit definierter Konzentration, zur Regeneration einer Wasserbehandlungsanlage, die Mittel zur Aufbereitung von Wasser aufweist, mit einer Treibwasserdüse, durch die Treibwasser in eine mit der Regeneriermittellösung über einen Sauganschluß in Verbindung stehende Unterdruckkammer derart eingeleitet werden kann, daß Regeneriermittellösung angesaugt und mit dem Treibwasser zu Mischwasser vereinigt wird, sowie mit einer Fangdüse, durch die das Mischwasser den Mitteln zur Wasseraufbereitung zugeführt wird,
dadurch gekennzeichnet,
daß zwei Injektoren (I, II) an dieselbe Treibwasserleitung (2) angeschlossen sind, wobei der Mischwasserausgang (6, 7) des ersten Injektors (I), der die Regeneriermittellösung ansaugt, an den Sauganschluß des zweiten Injektors (II) angeschlossen ist, so daß erst das Mischwasser, das der zweite Injektor (II) produziert, das eigentliche für die Regenerierung eingesetzte Mischwasser darstellt.

2. Injektor nach Anspruch 1, dadurch gekennzeichnet, daß zumindest ein Teil der erforderlichen Düsen (3, 6, 10, 12) als in das Injektorgehäuse einsetzbare und/oder einschraubbare Düseneinsätze ausgeführt sind.

3. Injektor nach Anspruch 2, dadurch gekennzeichnet, daß Düseneinsätze mit unterschiedlichen, insbesondere genormt abgestuften Düsendurchmessern vorgesehen sind.

4. Injektor nach einem der vorhergehenden Ansprüche, dadurch gekennzeichnet, daß das Verhältnis der Querschnittsflächen der Fangdüsen (6, 12) zu der Querschnittsfläche der jeweils dazugehörigen Treibwasserdüse (3, 10) etwa 2 zu 1 ist.

5. Injektor nach einem der vorhergehenden Ansprüche, dadurch gekennzeichnet, daß die Treibwasserdüse (10) des zweiten Injektors (II) etwa die gleiche Querschnittsfläche hat wie die Fangdüse (6) des ersten Injektors (I).

6. Injektor nach einem der vorhergehenden Ansprüche, dadurch gekennzeichnet, daß drei oder mehr Injektoren hintereinandergeschaltet sind.

7. Verwendung des Injektors nach einem der vorhergehenden Ansprüche in einer Wasserbehandlungsanlage, insbesondere einer Ionenaustauscheranlage, mit Mitteln zur Aufbereitung von Wasser, insbesondere einer ein Harzbett enthaltenden Ionenaustauscherstufe, mit einem Vorratsgefäß für die Bereitstellung einer Regeneriermittellösung zum Regenerieren der Mittel zur Wasseraufbereitung, insbesondere einem Salzsolebehälter.
